# FASCICULE DE BREVET EUROPEEN

(11) **EP 0 514 224 B1**
(45) Date de publication et mention de la délivrance du brevet: **07.12.1994**
(21) Numéro de dépôt: 92400701.6
(22) Date de dépôt: 17.03.1992
(51) Int. Cl.: B60T 13/57

(54) **Servomoteur pneumatique**
Unterdruckbremskraftverstärker
Pneumatic servo brake booster

(30) Priorité: 14.05.1991 FR 9105842
(43) Date de publication de la demande: 19.11.1992
(73) Titulaire: ALLIEDSIGNAL EUROPE SERVICES TECHNIQUES, 93700 Drancy (FR)
(72) Inventeur: Gautier, Jean-Pierre, BENDIX EUROPE, F-93700 Drancy (FR); Verbo, Ulysse, BENDIX EUROPE, F-93700 Drancy (FR); Perez, Miguel, BENDIX EUROPE, F-93700 Drancy (FR)
(74) Mandataire: Bentz, Jean-Paul

(56) Documents cités:
- EP-A- 0 218 510
- EP-A- 0 242 269

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique un piston comportant une partie tubulaire arrière et une jupe et qui, à l'aide d'une membrane déroulante, définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire d'un plongeur coulissant dans un alésage du piston, sur l'une des faces d'un disque de réaction solidaire d'une tige de poussée, le moyen de valve comportant un clapet coopérant avec un premier siège de valve formé sur le plongeur et avec un second siège de valve formé sur le piston, un organe de retenue du plongeur disposé dans un logement radial du piston et comportant une zone d'extrémité intérieure s'étendant dans l'alésage du piston et formant une surface de butée coopérant en butée axiale avec un épaulement du plongeur voir, par exemple, le document EP-A- 0 218 510.

De tels servomoteurs, s'ils ont un fonctionnement satisfaisant, présentent néanmoins quelques inconvénients. C'est ainsi que lors du freinage, le passage offert à l'air atmosphérique vers la chambre arrière est réduit, ce qui ralentit le mouvement de l'air en direction de la chambre arrière et accroît le temps de réponse du servomoteur. Différents compromis ont été proposés pour que ce temps de réponse soit acceptable pour des freinages dits "normaux" où seul un ralentissement du véhicule est désiré. Cependant, ce temps de réponse est toujours beaucoup trop important lors d'un freinage brusque où une intervention rapide de l'asservissement est désirée.

La présente invention a par conséquent pour objet de prévoir un servomoteur dont le temps de réponse soit le plus faible possible lors d'un freinage brusque. Dans ce but, l'invention a pour objet un servomoteur dans lequel des passages d'air supplémentaires entre l'atmosphère et la chambre arrière soient ouverts en cas de freinage brusque.

Selon la présente invention, l'organe de retenue est en permanence sollicité vers l'arrière par un moyen élastique pour solliciter dans le sens de la fermeture un second moyen de valve.

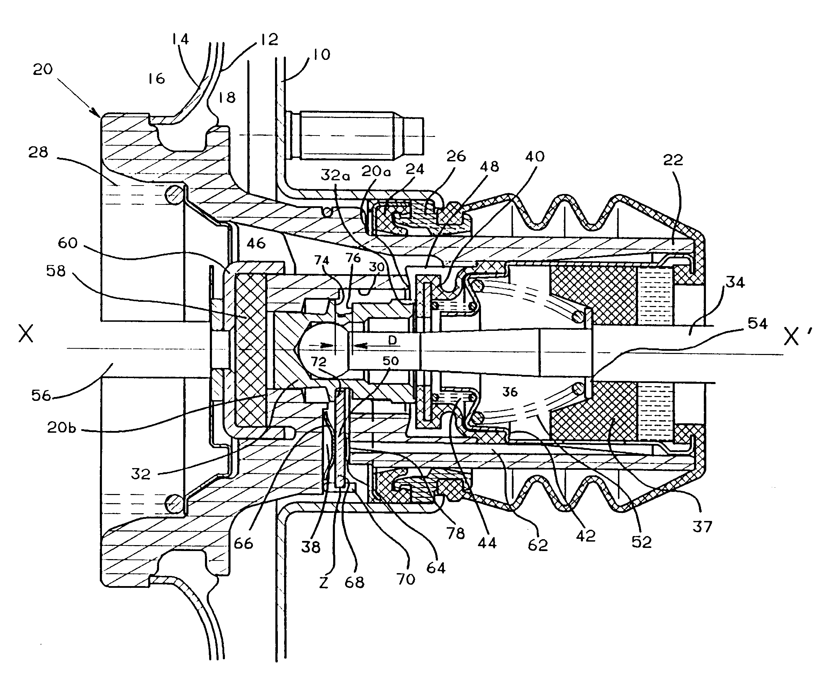

D'autres buts, caractéristiques et avantages ressortiront de la description qui suit d'un mode de réalisation de la présente invention,donnée à titre non limitatif, en référence aux dessins annexés dans lesquels :
- La Figure unique est une vue de côté, en coupe longitudinale, représentant la partie centrale d'un servomoteur pneumatique d'assistance au freinage réalisé conformément à la présente invention.

La Figure représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure comprend une enveloppe extérieure 10 en forme de coquille, présentant une symétrie de révolution autour d'un axe X-X′. Seule la partie centrale arrière de cette enveloppe 10 est représentée sur la Figure.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X′ du servomoteur. Ce piston creux 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression 28 interposé entre le piston 20 et la paroi avant (non représentée) de l'enveloppe extérieure 10 maintient normalement le piston 20 et la jupe 14 dans une position arrière de repos illustrée sur la Figure, dans laquelle la chambre arrière 18 présente son volume minimal et la chambre avant 16 son volume maximal.

Dans sa partie centrale située entre la partie arrière tubulaire 22 et la partie avant dans laquelle sont fixées la membrane 12 et la jupe 14, le piston 20 présente un alésage 30 dans lequel est reçu en coulissement un plongeur 32 présentant également une symétrie de révolution autour de l'axe X-X′. L'extrémité avant d'une tige de commande 34 du servomoteur, disposée également selon l'axe X-X′, est montée rotulante dans le plongeur 32. L'extrémité arrière (non représentée) de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire du piston 20 débouche vers l'atmosphère extérieure à l'arrière du servomoteur, par exemple par l'intermédiaire d'un filtre à air 37. Vers l'avant, ce même espace annulaire peut communiquer avec la chambre arrière 18 au travers d'un passage radial 38 formé dans la partie centrale du piston, lorsque des moyens d'assistance commandés par le plongeur 32 sont actionnés.

De façon classique, ces moyens d'assistance comprennent une valve trois voies comportant un clapet annulaire 40 monté dans la partie tubulaire du piston et deux sièges de valve annulaires 20a et 32a formés respectivement sur la partie centrale du piston 20 et sur le plongeur 32.

Le clapet 40 constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer le clapet 40 vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort 44.

Un second passage 46 est formé dans la partie centrale du piston 20, approximativement parallèlement à son axe X-X′, pour faire communiquer la chambre avant 16 du servomoteur avec une chambre annulaire 48 formée autour du clapet 40, à l'intérieur de la partie tubulaire 22 du piston 20. Lorsque le plongeur 32 occupe sa position arrière de repos illustrée sur la Figure, dans laquelle le clapet 40 est en appui étanche sur le siège 32a du plongeur 32 et écarté du siège 20a du piston 20, les chambres avant 16 et arrière 18 du servomoteur communiquent ainsi entre elles par le passage 46, la chambre annulaire 48 et le passage 38.

D'une manière elle aussi classique, au moins un organe de butée 50 encore appelé clé d'arrêt, est monté dans un logement radial de la partie centrale du piston 20 et délimite la course axiale vers l'arrière du plongeur 32 à l'intérieur de ce dernier. Le plongeur 32 est normalement maintenu dans la position arrière de repos définie par l'organe 50 au moyen d'un ressort de compression 52 interposé entre la coupelle 42 et une rondelle 54 elle-même en appui sur un épaulement formé sur la tige de commande 34.

Dans sa partie centrale, le piston 20 comprend une face avant annulaire 20b au centre de laquelle débouche l'alésage 30. Cette face avant annulaire 20b du piston 20 agit sur une face arrière d'une tige de poussée 56, au travers d'un disque de réaction 58 en un matériau déformable tel qu'un élastomère. De façon plus précise, la tige de poussée 56 et le disque de réaction 58 sont disposés selon l'axe X-X′ du servomoteur, dans le prolongement de la tige de commande 34 et du plongeur 32. Le disque de réaction 58 est coiffé par un capot 60 solidaire de la tige de poussée 56 et centré sur l'axe X-X′ du servomoteur et coopérant avec une gorge annulaire formée sur la partie centrale du piston 20, autour de la face avant annulaire 20b de ce dernier.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'effort effectué sur la pédale de frein par le conducteur a pour effet d'égaler l'effort de précontrainte du ressort 52 diminué de l'effort de précontrainte du ressort 44. Au cours du léger déplacement suivant de la tige de commande 34 et du plongeur 32, le clapet 40, sous l'action du ressort 44, suit le siège 32a du plongeur 32, jusqu'à ce qu'il vienne au contact du siège 20a du piston ; les chambres avant 16 et arrière 18 du servomoteur sont alors isolées l'une de l'autre.

Dans une deuxième phase de l'actionnement du frein, le plongeur 32 est déplacé suffisamment vers l'avant pour que le clapet 40 soit en contact étanche avec le siège 20a du piston et commence à s'éloigner du siège 32a du plongeur. Dans ces conditions, la chambre arrière 18 du servomoteur est isolée de la chambre avant 16 et entre en communication avec l'atmosphère.

La chambre arrière 18, qui communiquait auparavant avec la chambre avant 16 et se trouvait donc sous une pression réduite, aspire donc l'air à la pression atmosphérique à travers le passage de valve de faible section entre le clapet 40 et le siège de plongeur 32a. Il s'ensuit donc une entrave importante au passage de l'air, due à la faiblesse de l'interstice existant dans le passage de valve 32a-40 et donc un temps de réponse important qui, s'il est peu sensible dans un freinage où seul le ralentissement du véhicule est désiré, peut devenir prohibitif lorsqu'un freinage brusque ou important est désiré.

On comprend donc qu'il est hautement désirable de réaliser un servomoteur où, pour une action sur la tige de commande 34 correspondant à un freinage brusque ou important, la section offerte au passage de l'air soit la plus grande possible, pour que le temps de réponse soit le plus faible possible.

Ce but est atteint grâce à l'invention dont un exemple d'un mode de réalisation est représenté sur la Figure.

On voit sur la Figure que, conformément à la présente invention, un passage axial 62 est pratiqué dans l'épaisseur de la partie tubulaire arrière 22 du piston 20. Ce passage axial relie le passage radial 38 formé dans la partie centrale du piston à l'air à la pression atmosphérique en arrière du servomoteur ou à travers le filtre à air 37. Ce passage axial 62 peut avoir, comme on l'a représenté, une partie de sa longueur formée entre la partie tubulaire arrière 22 du piston 20 et la coupelle 42 qui se prolonge vers l'arrière et est fixe par rapport au piston 20.

De façon à ce que le servomoteur de l'invention ait un fonctionnement classique au repos et en freinage normal, le passage 62 est obturé par un clapet 64. De façon particulièrement avantageuse grâce à l'invention, le clapet 64 est formé directement sur l'organe de butée ou clé d'arrêt 50, servant à définir la position au repos du plongeur 32 par rapport au piston 20. pour remplir ce dernier rôle, la clé d'arrêt 50 est sollicitée vers l'arrière, dans le sens de fermeture du clapet 64, par un élément élastique 66 tel qu'un ressort en lame ou une rondelle Belleville. De façon avantageuse, la clé d'arrêt 50 avec le clapet 64, et le ressort 66 peuvent être disposés dans le passage radial 38 formé dans la partie centrale du piston, c'est-à-dire que le logement radial de l'organe de butée 50 est confondu avec le passage radial 38. De la sorte, le ressort 66 prend appui sur la paroi avant du passage 38 et applique le clapet 64 sur la paroi arrière du passage 38 à l'endroit où débouche le passage axial 62.

De façon également à ce que la clé d'arrêt 50 joue son rôle de définir la position au repos du plongeur 32, et celui-ci étant sollicité vers l'arrière par le ressort 52, il est prévu à l'extrémité de la clé d'arrêt 50 la plus éloignée radialement ou zone 68 d'extrémité extérieure de la clé d'arrêt 50, un maintien axial de cette extrémité 68 au moyen de l'extrémité recourbée d'un jonc 70, classiquement utilisé pour maintenir radialement la clé d'arrêt 50. On pourra par exemple prévoir une encoche dans l'extrémité recourbée du jonc 70 coopérant avec l'extrémité 68 de la clé 50. Ainsi, la clé d'arrêt 50, étant sollicitée par son extrémité coopérant avec le plongeur 32, ou zone 72 d'extrémité intérieure de la clé d'arrêt 50 vers l'arrière, et son extrémité 68 étant immobilisée axialement par le jonc 70, viendra mettre en appui le clapet 64 sur la paroi arrière du passage 38.

Le fonctionnement du servomoteur qui vient d'être décrit se déduit aisément des explications qui précèdent.

Dans la position de repos représentée sur la Figure, c'est-à-dire celle où le servomoteur n'est pas actionné et où les chambres avant 16 et arrière 18 sont sous pression réduite, le piston 20, ainsi que la jupe 14 et la membrane déroulante 12 qui lui sont associées, est en position arrière de repos en butée contre le joint d'étanchéité annulaire armé 24 et la bague 26 par un épaulement correspondant.

La tige de commande 34 ainsi que le plongeur 32 sont sollicités vers l'arrière par le ressort 52, le plongeur 32 étant en butée sur l'organe de butée 50 par l'intermédiaire d'un épaulement 74 tourné vers l'arrière en appui sur la zone d'extrémité intérieure 72 de la clé d'arrêt 50.

La première phase d'actionnement, au cours de laquelle les chambres avant 16 et arrière 18 sont isolées l'une de l'autre, est identique à celle qui a été décrite précédemment pour un servomoteur classique. En effet, l'épaulement 74 du plongeur 32 quitte l'extrémité 72 de la clé 50, mais le clapet 64 reste sur son siège 78 sous l'action du ressort 66.

Dans la deuxième phase d'actionnement normal du frein, la chambre arrière 18 du servomoteur est mise en communication avec l'atmosphère par le passage radial 38, l'espace annulaire dans l'alésage 30 autour du plongeur 32 et le passage de valve 32a-40. Il s'ensuit un déséquilibre des pressions sur les deux faces de la jupe 14 du piston, donnant naissance à une force d'assistance transmise par le piston 20 à la tige de poussée 56. Plus exactement, cette force d'assistance est exercée par la face avant annulaire 20b du piston 20 sur le disque de réaction 58. Ce dernier transmet une partie de la force d'assistance à la tige de poussée 56 et utilise une autre partie de cette force pour se déformer vers l'arrière dans l'espace compris entre l'alésage 30 et la face avant du plongeur 32. Cette déformation se poursuit jusqu'à ce que la partie déformée du disque de réaction 58 vienne au contact de la face avant du plongeur 32. Au cours de cette phase qui correspond à ce qu'on appelle le saut du servomoteur, le piston 20 et le plongeur 32 avancent ensemble. A la fin de cette phase, une réaction commence à naître sur le plongeur 32 et la tige de poussée 34, faisant reculer le plongeur 32 par rapport au piston 20, et entraînant donc la fermeture du passage de valve 32a-40.

On voit donc que, lors d'un freinage normal, le servomoteur de l'invention se comporte de façon classique.

Par contre, dans une phase d'actionnement brusque du frein, une force soudaine est exercée sur la tige de commande 34. Il s'ensuit un avancement rapide du plongeur 32 dans l'alésage 30. La première phase d'isolement des chambres avant et arrière se déroule classiquement. Puis le passage de valve 32a-40 s'ouvre, permettant à l'air à la pression atmosphérique de pénétrer dans la chambre arrière 18 via l'espace annulaire dans l'alésage 30 autour du plongeur 32 et le passage 38. La pression dans la chambre arrière augmente donc, créant une force d'assistance sur le piston 20. Cependant, étant donnée la soudaineté de l'actionnement, pendant l'augmentation de pression dans la chambre arrière et celle de la force d'assistance, le plongeur 32 continue à avancer dans le piston 20 plus loin qu'il ne le faisait lors d'un actionnement normal. Il s'ensuit que le passage de valve 32a-40 est plus ouvert, c'est-à-dire qu'il offre une section de passage à l'air plus importante que dans un freinage normal, mais qui est encore jugée trop insuffisante.

Conformément à l'invention, un second passage est offert à l'air à la pression atmosphérique pour parvenir à la chambre arrière 18. En effet, le plongeur 32 ayant pénétré dans le piston 20 d'une quantité supérieure à celle d'un freinage normal, ce plongeur vient faire porter un second épaulement 76 tourné vers l'avant contre la zone d'extrémité intérieure 72 de la clé d'arrêt 50.

Dans la poursuite de ce mouvement, l'épaulement 76 du plongeur 32 entraîne vers l'avant la zone d'extrémité intérieure 72 de la clé d'arrêt 50, qui ne peut faire d'autre mouvement que de pivoter autour d'un axe Z perpendiculaire à la direction de coulissement du plongeur 32 dans l'alésage 30 du piston 20, c'est-à-dire perpendiculaire à l'axe X-X′. Cet axe Z se trouve matérialisé par le point d'ancrage de l'extrémité 68 de la clé 50 sur le jonc 70, lui-même solidaire du piston 20. Ce mouvement de pivotement ou de rotation s'effectue à l'encontre de l'action du ressort 66.

Dans ce mouvement de rotation de la clé d'arrêt 50, et plus précisément dans celui de sa zone d'extrémité intérieure 72 vers l'avant dans un mouvement de rotation autour de l'axe Z, le clapet 64 est amené à quitter son siège 78 constitué par la face arrière du passage radial 38 située autour du passage axial 62, ouvrant de la sorte un second moyen de valve pour l'air à la pression atmosphérique vers la chambre arrière 18.

On comprend donc que, dans cette situation de freinage brusque, l'air à la pression atmosphérique est admis dans la chambre arrière du servomoteur par le passage de valve 32a-40, l'espace annulaire dans l'alésage 30 autour du plongeur 32 et le passage radial 38, et aussi par le passage axial 62, le passage de valve 64-78 et le passage radial 38. On voit donc que dans ce cas de freinage extrême, le passage radial 38 est relié à l'atmosphère par deux sources : le passage de valve 32a-40 et le passage de valve 64-78. Il en résulte évidemment un plus grand afflux d'air vers la chambre arrière, dont une augmentation plus rapide de la force d'assistance, et donc une diminution du temps de réponse, ce qui était bien le but recherché.

Pendant cette phase de fonctionnement brusque, le disque de réaction 58 a été également sollicité par la face avant 20b du piston. Mais au cours de sa déformation vers l'arrière, il a très vite rencontré la face avant du plongeur qui avait avancé suffisamment pour ouvrir le passage de valve 64-78.

La réaction de la tige de poussée 56 a donc été très vite transmise à la tige de commande 34. Lorsque le conducteur a atteint l'effort maximum de freinage, ou l'effort souhaité, ce qu'il ressent au "toucher" de la pédale de frein, il maintient constant sont effort de freinage ou il le relâche, ce qui est retransmis à la tige de commande. Le disque de réaction 58 tend alors à reprendre une position d'équilibre pour l'effort demandé. La face annulaire avant 20a du piston 20 fournissant toujours le même effort puisque la différence des pressions sur les deux faces de la jupe 14 n'a pas varié, le disque de réaction 58 va avoir tendance à se déformer davantage vers l'arrière, repoussant ainsi le plongeur 32 par rapport au piston 20.

Dans ce mouvement, l'épaulement 76 du plongeur 32 va laisser revenir la zone d'extrémité intérieure 72 de la clé d'arrêt 50 vers l'arrière, sous l'action du ressort 66. Le passage supplémentaire 62 va donc se trouver à nouveau obturé et le servomoteur va revenir à un fonctionnement classique.

Les positions relatives au repos du plongeur 32 et du piston 20 sont définies par la venue en butée de la clé d'arrêt 50 sur l'épaulement 74. Les positions relatives du plongeur 32 et du piston 20 en ce qui concerne l'ouverture du second moyen de valve constitué du clapet 64 et du siège 78 sont définies par la venue en butée de la clé d'arrêt 50 sur l'épaulement 76. Il est donc clair que la distance axiale D entre les épaulements 74 et 76 du plongeur 32 détermine la course du plongeur 32 dans le piston 20 pendant laquelle le fonctionnement du servomoteur reste classique, et après laquelle le fonctionnement du servomoteur sera modifié selon la présente invention pour obtenir un temps de réponse plus bref en fonction de la rapidité ou de la nature de l'action du conducteur du véhicule sur la tige de commande 34.

On pourra donc déterminer cette distance D en fonction des caractéristiques que l'on désire procurer à un servomoteur donné.

On voit donc bien qu'on a réalisé un servomoteur dont le fonctionnement est classique pour des conditions normales d'utilisation, et où des passages d'air supplémentaires sont ouverts lors de freinages brusques, pour diminuer le temps de réponse du servomoteur dans ces conditions extrêmes.

Bien entendu, l'invention n'est pas limitée au mode de réalisation qui a été décrit à titre d'exemple, mais est susceptible de recevoir de nombreuses modifications qui apparaîtront à l'homme du métier. C'est ainsi par exemple que plusieurs passages d'air supplémentaires pourront être répartis sur le pourtour de la partie tubulaire arrière du piston.

D'autre part, l'invention pourra également être appliquée à des servomoteurs en tandem ou à chambre additionnelle d'assistance. On pourra également réduire encore le temps de réponse du servomoteur pour des freinages brusques en reliant l'extrémité arrière du passage axial 62 à une source d'air sous une pression supérieure à la pression atmosphérique. De la sorte, pour des freinages normaux où seul le passage 32a-40 est ouvert vers la chambre arrière, celle-ci est alimentée en air à la pression atmosphérique de façon classique. par contre, pour des freinages brusques où un ou plusieurs passages 62 sont également ouverts, la chambre arrière se trouvera alimentée également en air sous une pression supérieure à la pression atmosphérique, d'où un remplissage plus rapide de cette chambre, et une diminution corrélative du temps de réponse.

## Revendications

1. Servomoteur pneumatique d'assistance au freinage comportant une enveloppe (10) à l'intérieur de laquelle se trouve un piston (20) formé d'une partie tubulaire arrière (22) supportant une jupe (14) et qui, à l'aide d'une membrane déroulante (12) définit une chambre avant (16) reliée en permanence à une source dépression et une chambre arrière (18) reliée sélectivement à la chambre avant (16) ou à l'atmosphère par un moyen de valve (20a, 32a, 40) actionné par une tige de commande (34) susceptible de s'appuyer, par l'intermédiaire d'un plongeur (32) coulissant dans un alésage (30) du piston (20) sur l'une des faces d'un disque de réaction (58) solidaire d'une tige de poussée (56), le moyen de valve (20a, 32a, 40) comportant un clapet (40) coopérant avec un premier siège de valve (32a) formé sur le plongeur (32) et avec un second siège de valve (20a) formé sur le piston (20), un organe de retenue (50) du plongeur (32) disposé dans un logement radial (38) du piston (20) et comportant une zone d'extrémité intérieure (72) s'étendant dans l'alésage (30) du piston (20) et formant une surface de butée coopérant en butée axiale avec un épaulement (74) du plongeur (32), caractérisé en ce que l'organe de butée (50) est en permanence sollicité vers l'arrière par un moyen élastique (66) pour solliciter dans le sens de la fermeture un second moyen de valve (64, 78).

2. Servomoteur selon la revendication 1, caractérisé en ce que le second moyen de valve (64, 78) comporte un clapet (64) coopérant avec un troisième siège de valve (78) formé sur le piston (20).

3. Servomoteur selon la revendication 2, caractérisé en ce que le clapet (64) est formé sur l'organe de butée (50).

4. Servomoteur selon la revendication 3, caractérisé en ce que le second moyen de valve (64, 78) est sollicité dans le sens de l'ouverture par la venue en butée de la zone d'extrémité intérieure (72) de l'organe de butée (50) avec un second épaulement (76) du plongeur (32).

5. Servomoteur selon la revendication 4, caractérisé en ce que dans sa position d'ouverture, le second moyen de valve (64, 78) permet la communication entre la chambre arrière (18) du servomoteur et l'atmosphère.

6. Servomoteur selon la revendication 5, caractérisé en ce que l'ouverture du second moyen de valve (64, 78) est déterminée par la distance axiale (D) entre l'épaulement (74) du plongeur (32) et le second épaulement (76) du plongeur (32).

7. Servomoteur selon la revendication 6, caractérisé en ce que l'ouverture du second moyen de valve (64, 78) est obtenue lorsque le plongeur (32) a effectué par rapport au piston (20) une course dont la longueur est supérieure à la distance (D) axiale entre l'épaulement (74) du plongeur (32) et le second épaulement (76) du plongeur (32).

8. Servomoteur selon la revendication 7, caractérisé en ce que l'ouverture du second moyen de valve (64, 78) est réalisée par pivotement de l'organe de retenue (50) autour d'un axe (Z) perpendiculaire à la direction (X-X') de coulissement du plongeur (32) dans le piston (20).

9. Servomoteur selon la revendication 8, caractérisé en ce que l'axe de pivotement (Z) de l'organe de retenue (50) est constitué par un point d'ancrage de la zone d'extrémité extérieure (68) de l'organe de butée (50) sur une partie (70) solidaire du piston (20).

10. Servomoteur selon la revendication 9, caractérisé en ce que la course pour obtenir l'ouverture du second moyen de valve (64, 78) est effectuée par le plongeur (32) lors d'une action sur la tige de commande (34) correspondant à un freinage brusque.

## Claims

1. Pneumatic brake-booster comprising a casing (10) inside which is situated a piston (20) consisting of a rear tubular part (22) which supports a skirt (14) and which with the aid of an unwinding diaphragm (12) defines a front chamber (16) permanently connected to a vacuum source and a rear chamber (18) selectively connected to said front chamber (16) or to the atmosphere by a valve means (20a, 32a, 40) actuated by a control rod (34) adapted to bear, by means of a plunger (32) sliding in a bore (30) of said piston (20), against one face of a reaction disk (58) fastened to a push rod (56), said valve means (20a, 32a, 40) comprising a valve closure member (40) cooperating with a first valve seat (32a) formed on said plunger (32) and with a second valve seat (20a) formed on said piston (20), a retaining member (50), for said plunger (32), disposed in a radial space (38) in said piston (20) and having an inner end region (72) extending in said bore (30) of said piston (20) and forming a stop surface cooperating by axial abutment with a shoulder (74) on said plunger (32), characterized in that said stop member (50) is permanently urged towards the rear by a resilient means (66) in order to urge a second valve closure means (64, 78) in the closing direction.

2. Booster according to Claim 1, characterized in that said second valve means (64, 78) comprises a valve closure means (64) cooperating with a third valve seat (78) formed on said piston (20).

3. Booster according to Claim 2, characterized in that said valve closure member (64) is formed on said stop member (50).

4. Booster according to Claim 3, characterized in that said second valve means (64, 78) is urged in the opening direction by abutment of said inner end region (72) of said stop member (50) against a second shoulder (76) on said plunger (32).

5. Booster according to Claim 4, characterized in that in its open position said second valve means (65, 78) permits communication between said rear chamber (18) of the booster and the atmosphere.

6. Booster according to Claim 5, characterized in that the opening of said second valve means (64, 78) is determined by the axial distance (D) between said shoulder (74) of said plunger (32) and said second shoulder (76) of said plunger (32).

7. Booster according to Claim 6, characterized in that the opening of said second valve means (64, 78) is effected when said plunger (32) has made, relative to said piston (20), a stroke whose length is greater than said axial distance (D) between said shoulder (74) of said plunger (32) and said second shoulder (76) of said plunger (32).

8. Booster according to Claim 7, characterized in that the opening of said second valve means (64, 78) is effected by the pivoting of said retaining member (50) about an axis (Z) at right angles to the direction (X-X') of the sliding of said plunger (32) in said piston (20).

9. Booster according to Claim 8, characterized in that said pivoting axis (Z) of said retaining member (50) consists of an anchorage point of the outer end region (68) of said stop member (50) on a part (70) fastened to said piston (20).

10. Booster according to Claim 9, characterized in that the stroke effecting the opening of said second valve means (64, 78) is made by said plunger (32) when an action corresponding to heavy braking is applied to said control rod (34).

## Patentansprüche

1. Pneumatischer Bremsunterstützungs-Servomotor mit einem Gehäuse (10), in dessen Inneren sich ein Kolben (20) befindet, der aus einem rohrförmigen hinteren Teil (22) gebildet ist, das eine Schürze (14) trägt und mit Hilfe einer Abrollmembran (12) eine permanent mit einer Unterdruckquelle verbundene vordere Kammer (16) und eine hintere Kammer (18) abgrenzt, die wahlweise mit der vorderen Kammer (16) oder mit der Atmosphäre über ein Ventilmittel (20a, 32a, 40) verbunden ist, das von einer Steuerstange (34) betätigt wird, die in der Lage ist, sich über einen in einer Bohrung (30) des Kolbens (20) gleitenden Tauchkolben (32) an einer der Seiten einer fest mit einer Schubstange (56) verbundenen Reaktionsscheibe (58) abzustützen, wobei das Ventilmittel (20a, 32a, 40) ein Ventilelement (40) aufweist, das mit einem auf dem Tauchkolben (32) gebildeten ersten Ventilsitz (32a) und einem auf dem Kolben (20) gebildeten zweiten Ventilsitz (20a) zusammenwirkt, sowie mit einem Rückhalteorgan (50) für den Tauchkolben (32), das in einer radialen Aufnahme (38) des Kolbens (20) angeordnet ist und einen innere Endbereich (72) aufweist, der sich in die Bohrung (30) des Kolbens (20) erstreckt und eine Anschlagfläche bildet, die in einem axialen Anschlag mit einer Schulter (74) des Tauchkolbens (32) zusammenwirkt, dadurch gekennzeichnet, daß das Anschlagorgan (50) permanent von einem Federmittel (66) nach hinten beaufschlagt ist, um ein zweites Ventilmittel (64, 78) in der Schließrichtung zu beaufschlagen.

2. Servomotor nach Anspruch 1, dadurch gekennzeichnet, daß das zweite Ventilmittel (64, 78) ein Ventilelement (64) aufweist, das mit einem auf dem Kolben (20) gebildeten dritten Ventilsitz (78) zusammenwirkt.

3. Servomotor nach Anspruch 2, dadurch gekennzeichnet, daß das Ventilelement (64) auf dem Anschlagorgan (50) gebildet ist.

4. Servomotor nach Anspruch 1, dadurch gekennzeichnet, daß das zweite Ventilmittel (64, 78) in der Öffnungsrichtung dadurch beaufschlagt ist, daß der innere Endbereich (72) des Anschlagorgans (50) an einer zweiten Schulter (76) des Tauchkolbens (32) in Anlage gerät.

5. Servomotor nach Anspruch 4, dadurch gekennzeichnet, daß das zweite Ventilmittel (64, 78) in seiner geöffneten Stellung die Verbindung zwischen der hinteren Kammer (18) des Servomotors und der Atmosphäre ermöglicht.

6. Servomotor nach Anspruch 5, dadurch gekennzeichnet, daß das Öffnen des zweiten Ventilmittels (64, 78) von dem axialen Abstand (D) zwischen der Schulter (74) des Tauchkolbens (32) und der zweiten Schulter (76) des Tauchkolbens (32) bestimmt ist.

7. Servomotor nach Anspruch 6, dadurch gekennzeichnet, daß das Öffnen des zweiten Ventilmittels (64, 78) dann erhalten wird, wenn der Tauchkolben (32) bezüglich des Kolbens (20) einen Weg zurückgelegt hat, dessen Länge größer als der axiale Abstand (D) zwischen der Schulter (74) des Tauchkolbens (32) und der zweiten Schulter (76) des Tauchkolbens (32) ist.

8. Servomotor nach Anspruch 7, dadurch gekennzeichnet, daß das Öffnen des zweiten Ventilmittels (64, 78) durch ein Schwenken des Rückhalteorgans (50) um eine zur Gleitrichtung (X-X') des Tauchkolbens (32) im Kolben (20) senkrechte Achse (Z) erhalten wird.

9. Servomotor nach Anspruch 8, dadurch gekennzeichnet, daß die Schwenkachse (Z) des Rückhalteorgans (50) durch einen Verankerungspunkt des äußeren Endbereichs (68) des Anschlagorgans (50) an einem fest mit dem Kolben (20) verbundenen Teil (70) gebildet ist.

10. Servomotor nach Anspruch 9, dadurch gekennzeichnet, daß der Weg zum Erhalten des Öffnens des zweiten Ventilmittels (64, 78) vom Tauchkolben (32) bei einer einem abrupten Bremsen entsprechenden Einwirkung auf die Steuerstange (34) zurückgelegt wird.
